# FASCICULE DE BREVET EUROPEEN

(11) **EP 0 933 254 B1**
(45) Date de publication et mention de la délivrance du brevet: **14.08.2002**
(21) Numéro de dépôt: 99400196.4
(22) Date de dépôt: 28.01.1999
(51) Int. Cl.: B60Q 1/068, F16B 19/00

(54) **Elément de fixation intermédiaire pour le montage d'un réflecteur sur une partie d'appui d'un projecteur**
Zwischenstück zum Reflektoreinbau auf ein Auflagelement eines Scheinwerfers
Intermediate element for mounting a reflector on a supporting member of a headlamp

(30) Priorité: 30.01.1998 FR 9801054
(43) Date de publication de la demande: 04.08.1999
(73) Titulaire: VALEO VISION, 93000 Bobigny (FR)
(72) Inventeur: Gonzalez Gallegos, Fermin, 94004 Créteil (FR); Ochoa Ibanez, Ana-Maria, 94004 Créteil (FR)
(74) Mandataire: Le Forestier, Eric

(56) Documents cités:
- EP-A- 0 225 480
- EP-A- 0 464 690
- EP-A- 0 596 428
- EP-A- 0 822 118
- FR-A- 2 547 369

## Description

La présente invention concerne de manière générale le montage d'un réflecteur sur une partie d'appui d'un projecteur de véhicule automobile.

Plus particulièrement, elle concerne un projecteur de véhicule automobile comprenant un réflecteur monté sur une partie d'appui par l'intermédiaire d'un élément de fixation intermédiaire présentant une première extrémité apte à coopérer avec ladite partie d'appui et une deuxième extrémité apte à coopérer avec une partie de montage du réflecteur selon une direction de montage/démontage X.

L'invention concerne également un élément de fixation intermédiaire pour un tel montage.

On connaît déjà des projecteurs avec ou sans boîtier dans lesquels le réflecteur est monté par l'intermédiaire d'une tige de montage dont une extrémité est vissée ou bien fixée dans une partie fixe du projecteur. Une telle tige de montage comporte à son autre extrémité une tête sphérique apte à être encliquetée dans une tourelle de montage du réflecteur.

Pour permettre la coopération de la tête sphérique de la tige de montage avec la tourelle de montage du réflecteur, il est nécessaire que ladite tourelle de montage comprenne un aménagement spécifique, du type logement sphérique de forme complémentaire de celle de ladite tête sphérique.

En outre, on connaît un projecteur de véhicule automobile dans lequel le réflecteur est monté par l'intermédiaire d'une douille de montage sur une partie d'appui du projecteur.

Cette douille de montage comporte une languette de montage qui s'étend selon la direction de montage/démontage de ladite douille dans la tourelle de montage du réflecteur.

La languette de montage comprend à son extrémité une dent d'encliquetage destinée à s'encliqueter sur la paroi externe de ladite tourelle de montage lors de l'engagement de la douille de montage dans ladite tourelle selon ladite direction de montage/démontage.

Enfin, on connaît du document EP 0 596 428 A1, un dispositif d'éclairage de véhicule automobile qui comporte un réflecteur pourvu sur sa partie arrière d'une partie de montage apte à coopérer avec un élément de fixation intermédiaire dont une extrémité se monte sur une partie d'appui du projecteur et une deuxième extrémité coopère avec ladite partie de montage du réflecteur.

Cet élément de fixation intermédiaire comporte d'une part un premier élément qui s'engage à l'intérieur de la partie de montage et dont la surface externe coopère par friction avec la paroi lisse interne de la partie de montage du réflecteur, et d'autre part, un second élément tubulaire qui recouvre la partie externe de la paroi de montage du réflecteur et qui est connecté par encliquetage au premier élément de l'élément de fixation intermédiaire.

Dans tous les projecteurs précités, de type connus pour le montage du réflecteur, il est nécessaire de réaliser une partie ou tourelle de montage de forme spécifique permettant sa coopération avec un élément de fixation intermédiaire qui dans le dernier cas précité est de forme complexe, ce qui implique des étapes de réalisation du réflecteur plus complexes et finalement un surcoût de fabrication du projecteur ainsi réalisé.

Afin de pallier aux inconvénients de l'état de la technique, la présente invention propose un nouveau projecteur de véhicule automobile du type précité en introduction, dans lequel le système de montage du réflecteur sur une partie d'appui du projecteur est particulièrement simple et économique.

Selon une caractéristique essentielle du projecteur conforme à l'invention, il est prévu une rondelle montée sur la deuxième extrémité dudit élément de fixation intermédiaire de sorte qu'elle s'étend généralement de manière sensiblement transversale à ladite direction de montage/démontage X, et qui présente un bord périphérique destiné à venir s'ancrer dans une surface lisse de ladite partie de montage du réflecteur, pour retenir ledit élément de fixation intermédiaire sur ladite partie de montage du réflecteur.

Selon l'invention, il peut être prévu que la rondelle présente un bord périphérique rectangulaire, ou circulaire, avec un profil aiguisé plat ou biseauté ou encore un profil en dents de scie.

La rondelle prévue dans le projecteur selon l'invention, peut présenter un profil plat ou être légèrement cintré selon un profil en forme d'entonnoir.

Suivant un mode de réalisation avantageux du projecteur selon l'invention, la deuxième extrémité de l'élément de fixation intermédiaire comporte des ailettes élastiquement déformables s'étendant généralement de manière sensiblement transversale à ladite direction de montage/démontage X et étant aptes à venir en prise avec la surface lisse de ladite partie de montage du réflecteur, en se déformant pour retenir par friction ledit élément de fixation intermédiaire sur ladite partie de montage du réflecteur.

De façon préférentielle, chaque ailette élastiquement déformable peut se présenter sous la forme d'un anneau délimité d'une part, par une surface supérieure tournée vers ladite partie d'appui, s'étendant transversalement à ladite direction de montage/démontage X, et d'autre part par une surface inférieure tournée vers le réflecteur, s'étendant selon une direction oblique Y à ladite direction de montage/démontage X suivant un sens opposé au sens de montage F1 dudit élément de fixation intermédiaire sur ladite partie de montage du réflecteur en direction de ladite paroi lisse.

Suivant un mode de réalisation avantageux du projecteur selon l'invention, l'élément de fixation intermédiaire comprend un corps cylindrique pourvu sur sa surface extérieure d'une gorge pour le montage de la rondelle qui comprend à cet effet, un orifice central ouvert sur le bord périphérique par une partie évasée, ladite rondelle étant destinée à être montée sur le corps de l'élément de fixation intermédiaire par cloquage avec un passage d'un point dur au niveau du raccordement entre la partie évasée et l'orifice central de ladite rondelle.

Selon ce mode de réalisation, le corps de l'élément de fixation intermédiaire peut être pourvu sur sa surface extérieure desdites ailettes élastiquement déformables, ledit corps étant apte à être engagé selon la direction de montage/démontage X à l'intérieur d'un trou borgne à paroi lisse de ladite partie de montage du réflecteur, de sorte que lesdites ailettes viennent en prise avec ladite paroi lisse du trou borgne en se déformant pour s'incliner selon une direction oblique par rapport à ladite direction de montage suivant un sens opposé au sens d'engagement F1 dudit corps dans ledit trou borgne, et le bord périphérique de la rondelle s'ancre dans la paroi lisse du trou borgne, ladite rondelle s'inclinant selon une direction oblique par rapport à la direction de montage/démontage X suivant un sens opposé au sens d'engagement F1 dudit corps dans ledit trou borgne.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue de côté d'un premier mode de réalisation d'un élément de fixation intermédiaire selon l'invention,
- la figure 2 est une vue en coupe longitudinale de l'élément de fixation intermédiaire de la figure 1,
- la figure 3 est une vue de côté d'un deuxième mode de réalisation d'un élément de fixation intermédiaire selon l'invention,
- la figure 4 est une vue en coupe longitudinale de l'élément de fixation intermédiaire de la figure 3,
- la figure 5 est une vue de détail en coupe d'une ailette de l'élément de fixation intermédiaire de la figure 3,
- les figures 6 à 9 représentent chacune, un mode de réalisation particulier de la rondelle montée sur l'élément de fixation intermédiaire des figures 1 à 4,
- la figure 10 représente une vue en coupe de la rondelle de la figure 7,
- la figure 11 représente l'engagement de l'élément de fixation intermédiaire de la figure 3 vue en coupe longitudinale, dans une partie de montage, et
- la figure 12 représente un essai de démontage de l'élément de fixation intermédiaire de la figure 3 une vue en coupe de ladite partie de montage.

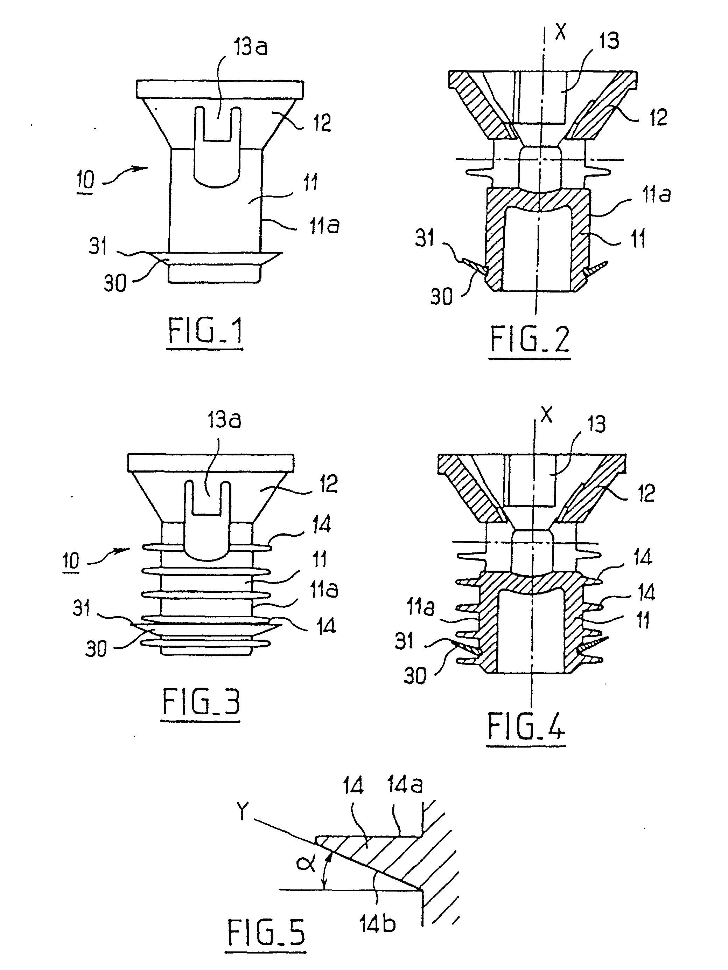

Sur les figures 1 à 4, on a représenté deux modes de réalisation d'un élément de fixation intermédiaire 10 destiné notamment au montage d'un réflecteur (non représenté) sur une partie d'appui d'un projecteur de véhicule automobile (non représenté).

Cet élément de fixation intermédiaire 10 s'étend selon une direction générale X qui est la direction de montage/démontage dudit élément de fixation intermédiaire sur une partie de montage 20 du réflecteur (non représenté).

Il comporte une première extrémité 12 apte à coopérer avec ladite partie d'appui (non représentée) du projecteur.

On entend par partie d'appui, par exemple une tige de réglage montée à translation sur une partie fixe (non représentée) du projecteur tel qu'un boîtier de projecteur ou une partie de la carrosserie, ou par exemple une tige de montage fixée sur une partie fixe d'un projecteur.

Comme le montre les figures 2 et 4, la première extrémité 12 dudit élément de fixation intermédiaire 10 comporte un logement 13 qui s'étend généralement selon la direction de montage/démontage X dudit élément de fixation intermédiaire et qui présente une ouverture vers l'extérieur. Les parois latérales dudit logement 13 sont pourvues de découpes formant des languettes élastiques 13a (voir figures 1 et 3) pour le cloquage du logement 13 de l'extrémité 12 sur la sphère d'extrémité d'une tige de réglage ou de montage du projecteur.

En outre, l'élément de fixation intermédiaire 10 représenté sur les figures 1 à 4, comporte une deuxième extrémité 11 constituée ici par un corps cylindrique creux 11 s'étendant selon la direction de montage/démontage X.

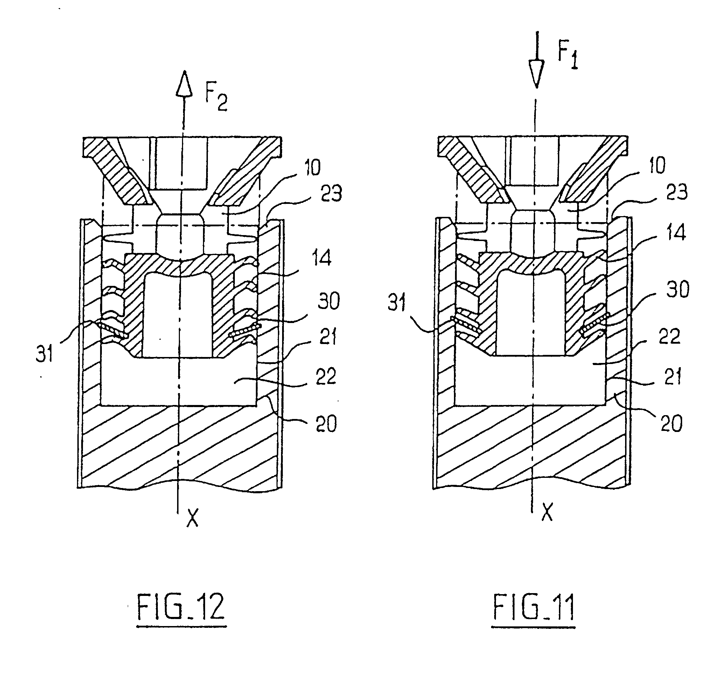

En outre, comme le montre les figures 1 à 4, il est prévu une rondelle 30 montée sur le corps 11 dudit élément intermédiaire 10 de sorte qu'elle s'étend généralement de manière sensiblement transversale à ladite direction de montage/démontage X. Cette rondelle 30 présente un bord périphérique 31 qui comme le montre la figure 11 est destiné à venir s'ancrer dans une surface lisse 21 de la partie de montage 20 du réflecteur pour retenir ledit élément de fixation intermédiaire 10 sur ladite partie de montage 20 du réflecteur.

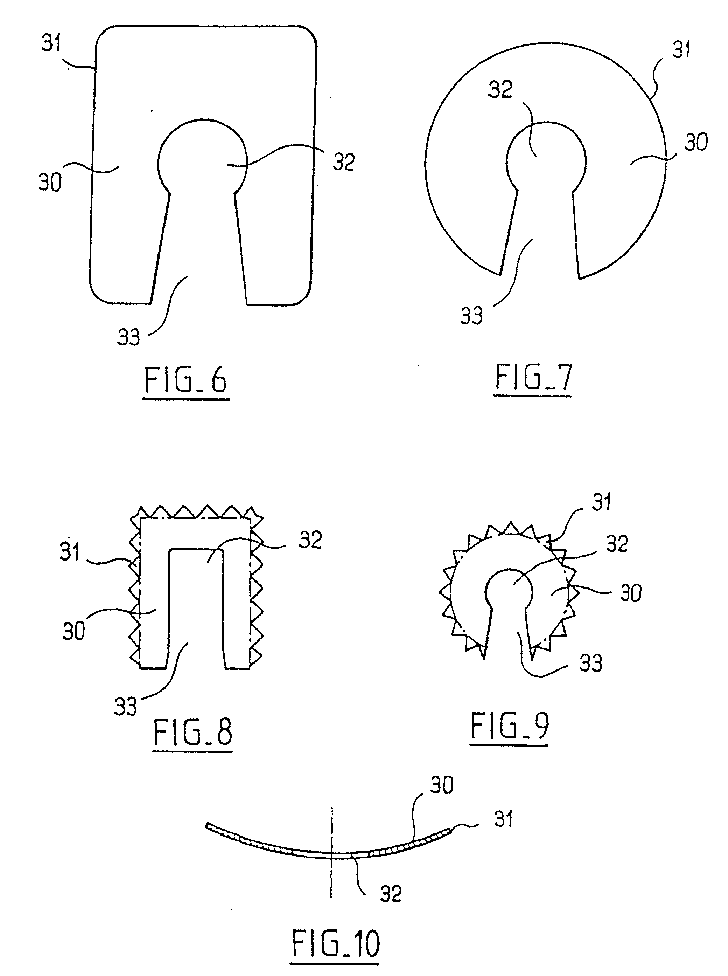

Pour le montage de la rondelle 30 sur le corps 11 dudit élément de fixation intermédiaire, le corps cylindrique 11 est pourvu sur sa surface extérieure 11a d'une gorge, et la rondelle 30 comprend à cet effet, un orifice central 32 (voir figures 6 à 9) ouvert sur le bord périphérique 31 par une partie évasée 33, ladite rondelle 30 pouvant être montée sur le corps 11 de l'élément de fixation intermédiaire 10 par cloquage avec un passage d'un point dur au niveau du raccordement entre la partie évasée 33 et l'orifice central 32 de la rondelle 30.

Les figures 6 à 9 représentent des modes de réalisation différents de la rondelle 30.

Selon le mode de réalisation représenté sur la figure 6, la rondelle 30 présente un bord périphérique 31 rectangulaire aux coins arrondis. L'orifice central 32 de la rondelle 30 est un orifice circulaire qui s'ouvre sur le bord périphérique 31 par une partie évasée 33 aux bords rectilignes.

Selon le mode de réalisation représenté sur la figure 7, la rondelle 30 présente un bord périphérique 31 circulaire de sorte qu'elle est conformée en forme d'anneau, avec un orifice central 32 circulaire qui s'ouvre par la partie évasée 33 sur le bord périphérique 31.

Selon le mode de réalisation des figures 6 et 7, le bord périphérique 31 de la rondelle 30 présente un profil aiguisé plat ou biseauté.

Sur la figure 8, on a représenté un autre mode de réalisation de la rondelle 30 selon lequel, le bord périphérique 31 suit un trajet rectangulaire en présentant un profil en dents de scie.

Selon ce mode de réalisation, l'orifice central 32 de la rondelle présente une forme rectangulaire qui s'ouvre sur le bord périphérique par une partie légèrement évasée 33 aux bords rectilignes.

Selon le mode de réalisation de la figure 9, le bord périphérique 31 de la rondelle 30 suit un trajet circulaire en présentant un profil en dents de scie.

L'orifice central 32 de cette rondelle 30 est circulaire et s'ouvre sur le bord périphérique 31 par une partie évasée 33 aux bords rectilignes.

La rondelle 30 peut présenter un profil plat ou encore comme le montre la figure 10, être légèrement cintrée selon un profil en forme d'entonnoir.

L'élément de fixation intermédiaire 10 présenté sur les figures 1 et 2 comporte un corps cylindrique 11 dont la surface extérieure 11a est lisse et c'est la rondelle 30 montée sur le corps cylindrique 11 qui est destinée comme cela a été mentionné précédemment à retenir l'élément de fixation intermédiaire sur la partie de montage, en s'ancrant dans la surface lisse 21 de la partie de montage 20 du réflecteur.

L'élément de fixation intermédiaire 10 représenté sur les figures 3 et 4, comporte un corps cylindrique creux 11 qui est pourvu sur sa surface extérieure 11a d'une pluralité d'ailettes 14 élastiquement déformables.

Ces ailettes 14 sont réparties régulièrement sur la longueur dudit corps 11.

Les ailettes 14 s'étendent généralement de manière sensiblement transversale à la direction de montage/démontage X et sont aptes (voir plus particulièrement les figures 11 et 12 décrites ultérieurement), à venir en prise avec une surface lisse 21 de la partie de montage 20 du réflecteur, en se déformant pour retenir par friction, l'élément de fixation intermédiaire sur la partie de montage 20.

Ainsi, selon ce mode de réalisation, la retenue de l'élément de fixation intermédiaire 10 sur la partie de montage 20 du réflecteur, est obtenue par l'action combinée de la rondelle 30 et des ailettes 14.

Chaque ailette 14 se présente sous la forme d'un anneau entourant ledit corps.

Comme le montre plus particulièrement la figure 5, cet anneau est délimité par une surface supérieure 14a tournée vers la partie d'appui et une surface inférieure 14b tournée vers le réflecteur.

La surface 14a de chaque anneau 14 s'étend transversalement à ladite direction de montage/démontage X et la surface inférieure 14b s'étend selon une direction oblique Y à la direction de montage/démontage X suivant un sens opposé au sens de montage F1 (voir figure 11) dudit élément de fixation intermédiaire 10 sur la partie de montage 20 du réflecteur, en direction de ladite surface lisse 21.

En particulier, la surface inférieure 14b de chaque ailette 14 forme un angle ∝ avec la direction transversale à la direction de montage/démontage X.

Cet angle ∝ présente une valeur de l'ordre de 7 degrés.

La rondelle 30 est réalisée en tôle fine et souple. L'élément de fixation intermédiaire 10 est réalisé dans une matière thermoplastique présentant une certaine élasticité.

Comme le montre la figure 11, le corps 11 de l'élément de fixation intermédiaire 10 est engagé à l'intérieur d'un trou borgne 22 d'une partie de montage 20 d'un réflecteur (non représenté), et comme celui-ci muni des ailettes et de la rondelle, présente un diamètre extérieur supérieur au diamètre intérieur du trou borgne 22, les ailettes 14 élastiquement déformables viennent en prise avec la surface lisse 21 du trou borgne 22 en se déformant de manière à s'incliner selon une direction plus accentuée que la direction oblique Y de départ par rapport à la direction de montage/démontage X suivant un sens opposé au sens de montage ou d'engagement F1 dudit corps 11 dans le trou borgne 22.

En outre, la rondelle 30 qui présente ici un profil en entonnoir, vient également s'incliner selon une direction oblique légèrement plus accentuée que la direction oblique de départ de l'entonnoir, par rapport à la direction de montage/démontage X suivant un sens opposé au sens de montage ou d'engagement F1 du corps 11 dans ledit trou borgne 22, et son bord périphérique 31 vient s'ancrer dans la paroi lisse 21 du trou borgne 22.

Pour faciliter l'engagement de l'élément de fixation intermédiaire 10 dans le trou borgne 22, la partie de montage 20 comporte un bord d'extrémité 23 évasé vers l'extérieur.

Les ailettes 14 permettent ainsi de retenir par friction ledit élément de fixation intermédiaire 10 sur la partie de montage 20.

La rondelle 30 dans le bord périphérique 31 est ancrée dans la paroi lisse 21 du trou borgne 22 et renforce la retenue de l'élément de fixation intermédiaire 10 sur la partie de montage 20.

Lorsque, comme le montre plus particulièrement la figure 12, on essaie de démonter l'élément de fixation intermédiaire 10 de la partie de montage 20 en tirant vers l'extérieur le corps 11 de l'élément de fixation intermédiaire du trou borgne 22 selon la flèche F2, les ailettes 14 se déforment en se courbant de telle sorte que les extrémités desdites ailettes se fixent dans la paroi lisse 21 dudit trou borgne 22 en s'opposant aux mouvements d'extraction vers l'extérieur selon la flèche F2 dudit élément de fixation intermédiaire 10.

En outre, la rondelle 30 dans le bord périphérique 31 est ancrée dans la paroi lisse 21 du trou borgne 22, se pose également le mouvement d'extraction vers l'extérieur selon le sens F2 dudit élément de fixation intermédiaire 10.

L'assemblage du réflecteur dudit élément de fixation intermédiaire est alors indémontable, le démontage de l'élément de fixation intermédiaire ne pouvant se produire sans entraîner la rupture des ailettes et/ou de la rondelle, et la détérioration dudit élément de fixation intermédiaire.

## Revendications

1. Projecteur de véhicule automobile comprenant un réflecteur monté sur une partie d'appui par l'intermédiaire d'un élément de fixation intermédiaire (10) présentant une première extrémité (12) apte à coopérer avec ladite partie d'appui et une deuxième extrémité (11) apte à coopérer avec une partie de montage (20) dudit réflecteur selon une direction de montage/démontage X, **caractérisé en ce qu'**il est prévu une rondelle (30) montée sur la deuxième extrémité (11) dudit élément de fixation intermédiaire (10) de sorte qu'elle s'étend généralement de manière sensiblement transversale à ladite direction de montage/démontage X, et qui présente un bord périphérique (31) destiné à venir s'ancrer dans une surface lisse (21) de ladite partie de montage (20) du réflecteur, pour retenir ledit élément de fixation intermédiaire (10) sur ladite partie de montage (20) du réflecteur.

2. Projecteur selon la revendication 1, **caractérisé en ce que** la rondelle (30) présente un bord périphérique (31) rectangulaire.

3. Projecteur selon la revendication 1, **caractérisé en ce que** la rondelle (30) présente un bord périphérique (31) circulaire.

4. Projecteur selon l'une des revendications 1 à 3, **caractérisé en ce que** le bord périphérique (31) de la rondelle (30) présente un profil aiguisé plat ou biseauté.

5. Projecteur selon l'une des revendications 1 à 3, **caractérisé en ce que** le bord périphérique (31) de la rondelle (30) présente un profil en dents de scie.

6. Projecteur selon l'une des revendications 1 à 5, **caractérisé en ce que** l'élément de fixation intermédiaire (10) comprend un corps cylindrique (11) pourvu sur sa surface extérieure (11a) d'une gorge pour le montage de la rondelle (30) qui comprend à cet effet un orifice central (32) ouvert sur le bord périphérique (31) par une partie évasée (33), ladite rondelle (30) étant destinée à être montée sur le corps (11) de l'élément de fixation intermédiaire (10) par cloquage avec un passage d'un point dur au niveau du raccordement entre la partie évasée (33) et l'orifice central (32) de ladite rondelle (30).

7. Projecteur selon l'une des revendications 1 à 6, **caractérisé en ce que** la rondelle (30) présente un profil plat.

8. Projecteur selon l'une des revendications 1 à 6, **caractérisé en ce que** la rondelle (30) est légèrement cintrée selon un profil en forme d'entonnoir.

9. Projecteur selon l'une quelconque des revendications précédentes, **caractérisé en ce que** ladite deuxième extrémité (11) de l'élément de fixation intermédiaire (10) comporte des ailettes (14) élastiquement déformables s'étendant généralement de manière sensiblement transversale à ladite direction de montage/démontage X et étant aptes à venir en prise avec la surface lisse (21) de ladite partie de montage (20) du réflecteur, en se déformant pour retenir par friction ledit élément de fixation intermédiaire (10) sur ladite partie de montage (20) du réflecteur.

10. Projecteur selon la revendication 9, **caractérisé en ce que** chaque ailette (14) élastiquement déformable se présente sous la forme d'un anneau délimité d'une part, par une surface supérieure (14a) tournée vers la partie d'appui, s'étendant transversalement à ladite direction de montage/démontage X et, d'autre part, par une surface inférieure (14b) tournée vers le réflecteur, s'étendant selon une direction oblique Y à ladite direction de montage/démontage X suivant un sens opposé au sens de montage F1 dudit élément de fixation intermédiaire (10) sur ladite partie de montage (20) du réflecteur en direction de ladite surface lisse (21).

11. Projecteur selon la revendication 10, **caractérisé en ce que** la surface inférieure (14b) de chaque ailette (14) forme un angle ∝ avec la direction transversale à ladite direction de montage/démontage X de l'ordre de 7 degrés.

12. Projecteur selon l'une des revendications 6 à 11, **caractérisé en ce que** le corps (11) de l'élément de fixation intermédiaire (10) est pourvu sur sa surface extérieure (11a) desdites ailettes (14) élastiquement déformables, ledit corps (11) étant apte à être engagé selon la direction de montage/démontage X à l'intérieur d'un trou borgne (22) à paroi lisse (21) de ladite partie de montage (20) du réflecteur de sorte que lesdites ailettes (14) viennent en prise avec ladite paroi lisse (21) du trou borgne (22) en se déformant pour s'incliner selon une direction oblique par rapport à ladite direction de montage (10) suivant un sens opposé au sens d'engagement F1 dudit corps (11) dans ledit trou borgne (22) et le bord périphérique (31) de la rondelle (30) s'ancre dans la paroi lisse (21) du trou borgne (22), ladite rondelle (30) s'inclinant selon une direction oblique par rapport à la direction de montage/démontage X suivant un sens opposé au sens d'engagement F1 dudit corps (11) dans ledit trou borgne (22).

13. Projecteur selon la revendication 12, **caractérisé en ce que** la partie de montage (20) comprend un bord d'extrémité (23) évasé vers l'extérieur, de façon à faciliter l'engagement de l'élément de fixation intermédiaire (10) dans le trou borgne (22).

14. Projecteur selon l'une des revendications1 à 13, **caractérisé en ce que** la première extrémité (12) dudit élément de fixation intermédiaire (10) est agencée de manière à pouvoir être cloquée sur l'extrémité d'une tige de réglage montée à translation dans une partie fixe du projecteur.

15. Projecteur selon l'une des revendications 1 à 13, **caractérisé en ce que** la première extrémité (12) de l'élément de fixation intermédiaire (10) est agencée de manière à pouvoir être cloquée sur l'extrémité d'une tige de montage fixée sur une partie fixe du projecteur.

16. Projecteur selon l'une des revendications 1 à 15, **caractérisé en ce que** l'élément de fixation intermédiaire (10) est réalisé en une matière thermoplastique présentant une légère élasticité.

17. Projecteur selon l'une des revendications 1 à 16, **caractérisé en ce que** la rondelle (30) est réalisée en tôle fine et souple.

18. Elément de fixation intermédiaire (10) destiné au montage d'un réflecteur sur une partie d'appui d'un projecteur de véhicule automobile, présentant une première extrémité (12) apte à coopérer avec ladite partie d'appui et une deuxième extrémité (11) apte à coopérer avec une partie de montage (20) dudit réflecteur selon une direction de montage/démontage (X), **caractérisé en ce qu'**il porte sur sa deuxième extrémité (11) une rondelle (30) s'étendant généralement de manière sensiblement verticale à ladite direction de montage/démontage (X), et présentant un bord périphérique (31) destiné à s'ancrer dans une surface lisse (21) de ladite partie de montage (20) du réflecteur pour retenir ledit élément de fixation intermédiaire (10) sur ladite partie de montage (20).

19. Elément de fixation intermédiaire selon la revendication 18, **caractérisé en ce qu'**il comporte des ailettes (14) élastiquement déformables s'étendant généralement de manière sensiblement transversale à ladite direction de montage/démontage (X) et étant aptes à venir en prise avec la surface lisse (21) de ladite partie de montage (20) du réflecteur en se déformant pour retenir par friction ledit élément de fixation intermédiaire sur ladite partie de montage (20).

## Patentansprüche

1. Kraftfahrzeugscheinwerfer mit einem Reflektor, der an einem Auflageteil mit Hilfe eines Befestigungszwischenstücks (10) angebracht ist, das ein erstes Ende (12) aufweist, das mit dem Auflageteil zusammenzuwirken vermag, sowie ein zweites Ende (11), das mit einem Montageteil (20) des Reflektors in einer Montage- bzw. Demontagerichtung X zusammenzuwirken vermag, **dadurch gekennzeichnet, daß** eine Unterlegscheibe (30) vorgesehen ist, die am zweiten Ende (11) des Befestigungszwischenstücks (10) so angebracht ist, daß sie sich allgemein im wesentlichen quer zur Montage- bzw. Demontagerichtung X erstreckt, und die einen Umfangsrand (31) aufweist, der dazu bestimmt ist, sich in einer glatten Oberfläche (21) des Montageteils (20) des Reflektors zu verankern, um dieses Befestigungszwischenstück (10) auf dem Montageteil des Reflektors zu halten.

2. Scheinwerfer nach Anspruch 1,
**dadurch gekennzeichnet, daß** die Unterlegscheibe (30) einen rechteckigen Umfangsrand (31) aufweist.

3. Scheinwerfer nach Anspruch 1,
**dadurch gekennzeichnet, daß** die Unterlegscheibe (30) einen kreisförmigen Umfangsrand (31) aufweist.

4. Scheinwerfer nach einem der Ansprüche 1 bis 3,
**dadurch gekennzeichnet, daß** der Umfangsrand (31) der Unterlegscheibe (30) ein flaches oder abgekantetes geschliffenes Profil aufweist.

5. Scheinwerfer nach einem der Ansprüche 1 bis 3,
**dadurch gekennzeichnet, daß** der Umfangsrand (31). der Unterlegscheibe (30) ein sägezahnförmiges Profil aufweist.

6. Scheinwerfer nach einem der Ansprüche 1 bis 5,
**dadurch gekennzeichnet, daß** das Befestigungszwischenstück (10) einen zylindrischen Körper (11) umfaßt, der an seiner Außenseite (11a) mit einer Nut zur Anbringung der Unterlegscheibe (30) versehen ist, die zu diesem Zweck eine mittige öffnung (32) aufweist, welche am Umfangsrand (31) durch eine konisch erweiterte Ausnehmung (33) geöffnet ist, wobei die Unterlegscheibe (30) dazu bestimmt ist, an dem Körper (11) des Befestigungszwischenstücks (10) durch Einrasten angebracht zu werden und hierbei eine harte Stelle am Übergang zwischen der konisch erweiterten Ausnehmung (33) und der mittigen Öffnung (32) der Unterlegscheibe (30) passiert wird.

7. Scheinwerfer nach einem der Ansprüche 1 bis 6,
**dadurch gekennzeichnet, daß** die Unterlegscheibe (30) ein ebenes Profil aufweist.

8. Scheinwerfer nach einem der Ansprüche 1 bis 6,
**dadurch gekennzeichnet, daß** die Unterlegscheibe (30) leicht trichterförmig gebogen ist.

9. Scheinwerfer nach einem der vorhergehenden Ansprüche,
**dadurch gekennzeichnet, daß** das zweite Ende (11) des Befestigungszwischenstücks (10) elastisch verformbare Rippen (14) aufweist, die sich allgemein im wesentlichen quer zur Montage- bzw. Demontagerichtung X erstrecken und mit der glatten Oberfläche (21) des Montageteils (20) des Reflektors unter Verformung in Eingriff kommen können, um das Befestigungszwischenstück (10) an dem Montageteil (20) des Reflektors durch Reibung zu halten.

10. Scheinwerfer nach Anspruch 9,
**dadurch gekennzeichnet, daß** jede elastisch verformbare Rippe (14) die Form eines Rings aufweist, der einerseits durch eine dem Auflageteil zugewandte Oberseite (14a), die sich quer zur Montage- bzw. Demontagerichtung X erstreckt, und andererseits durch eine dem Reflektor zugewandte Unterseite (14b) begrenzt ist, die sich entgegengesetzt zur Montagerichtung F1 des Befestigungszwischenstücks (10) an dem Montageteil (20) des Reflektors in einer schräg zur Montage- bzw. Demontagerichtung X verlaufenden Richtung Y in Richtung der glatten Oberfläche (21) erstreckt.

11. Scheinwerfer nach Anspruch 10,
**dadurch gekennzeichnet, daß** die Unterseite (14b) jeder Rippe (14) einen Winkel α von etwa 7 Grad mit der quer zur Montage- bzw. Demontagerichtung X verlaufenden Richtung bildet.

12. Scheinwerfer nach einem der Ansprüche 6 bis 11,
**dadurch gekennzeichnet, daß** der Körper (11) des Befestigungszwischenstücks (10) an seiner Außenseite (11a) mit diesen elastisch verformbaren Rippen (14) versehen ist, wobei der Körper (11) in Montage- bzw. Demontagerichtung X innen in ein Sackloch (22) mit glatter Wandung (21) des Montageteils (20) des Reflektors eingeführt zu werden vermag, so daß die Rippen (14) in Eingriff mit dieser glatten Wandung (21) des Sacklochs (22) kommen und sich dabei verformen, um sich in bezug auf die Montagerichtung (10) in einer Richtung schräg zu stellen, die der Einführungsrichtung F1 des Körpers (11) in das Sackloch (22) entgegengesetzt ist, und sich der Umfangsrand (31) der Unterlegscheibe (30) in der glatten Wand des Sacklochs (22) verankert, wobei sich die Unterlegscheibe (30) in bezug auf die Montage- bzw. Demontagerichtung X in eine Richtung schräg stellt, die der Einführungsrichtung F1 des Körpers (11) in das Sackloch (22) entgegengesetzt ist.

13. Scheinwerfer nach Anspruch 12,
**dadurch gekennzeichnet, daß** das Montageteil (20) am Ende einen nach außen konisch erweiterten Rand (23) umfaßt, um das Einführen des Befestigungszwischenstücks (10) in das Sackloch (22) zu erleichtern.

14. Scheinwerfer nach einem der Ansprüche 1 bis 13,
**dadurch gekennzeichnet, daß** das erste Ende (12) des Befestigungszwischenstücks (10) so ausgebildet ist, daß es auf das Ende einer Einstellstange aufgesetzt werden kann, die in einem feststehenden Teil des Scheinwerfers translatorisch verstellbar angebracht ist.

15. Scheinwerfer nach einem der Ansprüche 1 bis 13,
**dadurch gekennzeichnet, daß** das erste Ende (12) des Befestigungszwischenstücks (10) so ausgebildet ist, daß es auf das Ende einer Montagestange aufgesetzt werden kann, die an einem feststehenden Teil des Scheinwerfers befestigt ist.

16. Scheinwerfer nach einem der Ansprüche 1 bis 15,
**dadurch gekennzeichnet, daß** das Befestigungszwischenstück (10) aus einem thermoplastischen Material mit geringer Elastizität ausgeführt ist.

17. Scheinwerfer nach einem der Ansprüche 1 bis 16,
**dadurch gekennzeichnet, daß** die Unterlegscheibe (30) aus biegsamem Feinblech ausgeführt ist.

18. Befestigungszwischenstück (10), das zur Montage eines Reflektors an einem Auflageteil eines Kraftfahrzeugscheinwerfers bestimmt ist und ein erstes Ende (12) aufweist, das mit dem Auflageteil zusammenzuwirken vermag, sowie ein zweites Ende (11), das mit einem Montageteil (20) des Reflektors in einer Montage- bzw. Demontagerichtung zusammenzuwirken vermag, **dadurch gekennzeichnet, daß** es an seinem zweiten Ende (11) eine Unterlegscheibe (30) trägt, die sich allgemein nahezu senkrecht zur Montage- bzw. Demontagerichtung (X) erstreckt und einen Umfangsrand (31) aufweist, der dazu bestimmt ist, sich in einer glatten Oberfläche (21) des Montageteils (20) des Reflektors zu verankern, um dieses Befestigungszwischenstück (10) an dem Montageteil (20) zu halten.

19. Befestigungszwischenstück nach Anspruch 18,
**dadurch gekennzeichnet, daß** es elastisch verformbare Rippen (14) umfaßt, die sich allgemein im wesentlichen quer zur Montage- bzw. Demontagerichtung (X) erstrecken und unter Verformung mit der glatten Oberfläche (21) des Montageteils (20) des Reflektors in Eingriff kommen können, um das Befestigungszwischenstück an dem Montageteil (20) durch Reibung zu halten.

## Claims

1. Motor vehicle headlight comprising a reflector mounted on a support part by means of an intermediate fixing element (10) having a first end (12) able to cooperate with the said support part and a second end (11) able to cooperate with a mounting part (20) of the said reflector in a mounting/removal direction X, **characterised in that** there is provided a washer (30) mounted on the second end (11) of the said intermediate fixing element (10) so that it extends generally substantially transversely to the said mounting/removal direction X, and which has a peripheral edge (31) intended to be anchored in a smooth surface (21) of the said mounting part (20) of the reflector, in order to hold the said intermediate fixing element (10) on the said mounting part (20) of the reflector.

2. Headlight according to Claim 1, **characterised in that** the washer (30) has a rectangular peripheral edge (31).

3. Headlight according to Claim 1, **characterised in that** the washer (30) has a circular peripheral edge (31).

4. Headlight according to one of Claims 1 to 3, **characterised in that** the peripheral edge (31) of the washer (30) has a flat or bevelled sharp profile.

5. Headlight according to one of Claims 1 to 3, **characterised in that** the peripheral edge (31) of the washer (30) has a sawtooth profile.

6. Headlight according to one of Claims 1 to 5, **characterised in that** the intermediate fixing element (10) comprises a cylindrical body (11) provided on its external surface (11a) with a groove for mounting the washer (30) which comprises for this purpose a central orifice (32) open on the peripheral edge (31) through a splayed part (33), the said washer (30) being intended to be mounted on the body (11) of the intermediate fixing element (10) through a snap fit with passage of a hard spot at the connection between the splayed part (33) and the central orifice (32) of the said washer (30).

7. Headlight according to one of Claims 1 to 6, **characterised in that** the washer (30) has a flat profile.

8. Headlight according to one of Claims 1 to 6, **characterised in that** the washer (30) is slightly curved in a funnel-shaped profile.

9. Headlight according to any one of the preceding claims, **characterised in that** the said second end (11) of the intermediate fixing element (10) has elastically deformable fins (14) extending generally substantially transversely to the said mounting/removal direction X and being able to come into engagement with the smooth surface (21) of the said mounting part (20) of the reflector, deforming in order to hold the said intermediate fixing element (10) on the said mounting part (20) of the reflector by friction.

10. Headlight according to Claim 9, **characterised in that** each elastically deformable fin (14) is in the form of a ring delimited on the one hand by a top surface (14a) turned towards the support part, extending transversely to the said mounting/removal direction X, and on the other hand by a bottom surface (14b) turned towards the reflector, extending a direction Y oblique to the said mounting/removal direction X in a direction opposite to the direction of mounting F1 of the said intermediate fixing element (10) on the said mounting part (20) of the reflector in the direction of the said smooth surface (21).

11. Headlight according to Claim 10, **characterised in that** the bottom surface (14b) of each fin (14) forms an angle ∝ with the direction transverse to the said mounting/removal direction X of around 7 degrees.

12. Headlight according to one of Claims 6 to 11, **characterised in that** the body (11) of the intermediate fixing element (10) is provided on its external surface (11a) with the said elastically deformable fins (14), the said body (11) being able to be engaged in the mounting/removal direction X inside a blind hole (22) with a smooth wall (21) of the said mounting part (20) of the reflector so that the said fins (14) come into engagement with the said smooth wall (21) of the blind hole (22), deforming in order to incline in an oblique direction with respect to the said mounting direction (10) in a direction opposite to the direction of engagement F1 of the said body (11) in the said blind hole (22) and the peripheral edge (31) of the washer (30) anchors in the smooth wall (21) of the blind hole (22), the said washer (30) inclining in an oblique direction with respect to the mounting/removal direction X in a direction opposite to the direction of engagement F1 of the said body (11) in the said blind hole (22).

13. Headlight according to Claim 12, **characterised in that** the mounting part (20) comprises an end edge (23) splayed towards the outside, so as to facilitate the engagement of the intermediate fixing element (10) in the blind hole (22).

14. Headlight according to one of Claims 1 to 13, **characterised in that** the first end (12) of the said intermediate fixing element (10) is arranged so as to be able to be a push fit on the end of an adjustment rod mounted for translation in a fixed part of the headlight.

15. Headlight according to one of Claims 1 to 13, **characterised in that** the first end (12) of the intermediate fixing element (10) is arranged so as to be able to be a push fit on the end of a mounting rod fixed on a fixed part of the headlight.

16. Headlight according to one of Claims 1 to 15, **characterised in that** the intermediate fixing element (10) is produced from a thermoplastic material having slight elasticity.

17. Headlight according to one of Claims 1 to 16, **characterised in that** the washer (30) is produced from a thin flexible metal sheet.

18. Intermediate fixing element (10) intended for mounting a reflector on a support part of a motor vehicle headlight, having a first end (12) able to cooperate with the said support part and a second end (11) able to cooperate with a mounting part (20) of the said reflector in a mounting/removal direction (X), **characterised in that** it carries on its second end (11) a washer (30) extending generally substantially vertically to the said mounting/removal direction (X), and having a peripheral edge (31) intended to be anchored in a smooth surface (21) of the said mounting part (20) of the reflector in order to hold the said intermediate fixing element (10) on the said mounting part (20).

19. Intermediate fixing element according to Claim 18, **characterised in that** it has elastically deformable fins (14) extending generally substantially transversely to the said mounting/removal direction (X) and being able to come into engagement with the smooth surface (21) of the said mounting part (20) of the reflector, deforming in order to hold the said intermediate fixing element on the said mounting part (20) by friction.
